**Europäisches Patentamt**

**European Patent Office**

**Office européen des brevets**

(19)

(11) Veröffentlichungsnummer : **0 102 547**
**B1**

(12) **EUROPÄISCHE PATENTSCHRIFT**

(45) Veröffentlichungstag der Patentschrift :
12.11.86

(51) Int. Cl.⁴ : **B 21 D 43/05**, B 21 D 43/10,
B 21 J 13/08

(21) Anmeldenummer : 83107796.1

(22) Anmeldetag : 08.08.83

(54) **Transportautomat, insbesondere zur Pressenverkettung.**

(30) Priorität : 09.09.82 DEU 8225377

(43) Veröffentlichungstag der Anmeldung :
14.03.84 Patentblatt 84/11

(45) Bekanntmachung des Hinweises auf die Patenterteilung : 12.11.86 Patentblatt 86/46

(84) Benannte Vertragsstaaten :
BE FR GB IT NL SE

(56) Entgegenhaltungen :
EP-A- 0 043 059
DE-A- 2 534 820
DE-A- 2 630 858
US-A- 2 792 953
US-A- 3 718 216

(73) Patentinhaber : **Bilsing, Alfred**
**Schwedengraben 12**
**D-5952 Attendorn (DE)**

(72) Erfinder : **Bilsing, Alfred**
**Schwedengraben 12**
**D-5952 Attendorn (DE)**

(74) Vertreter : **Jochem, Bernd, Dipl.-Wirtsch.-Ing.**
**Staufenstrasse 36 Postfach 17 41 09**
**D-6000 Frankfurt/Main (DE)**

## Beschreibung

Die Erfindung bezieht sich auf einen Transportautomaten, insbesondere zur Pressenverkettung, mit einem um eine mittlere senkrechte Achse drehbaren und um eine mittlere waagerechte Achse kippbaren Doppelarm, dessen miteinander verbundene Arme unabhängig voneinander nach entgegengesetzten Seiten ausfahrbare, einzeln bewegbare Greifer tragen.

Es sind zahlreiche unterschiedliche Transportautomaten mit zwei Armen bekannt. Da die Arme meistens versetzt zueinander angeordnet oder einzeln an einem mittleren Tragteil gelagert sind, müssen bei weiter Auskragung und großen Traglasten, wie sie bei Transportautomaten zur Pressenverkettung vorkommen, vom mittleren Tragteil beträchtliche Momente aufgenommen werden. Dies wiederum bedingt eine schwere Konstruktion, insbesondere im Bereich der Lagerung und Führung der einzelnen Arme am mittleren Tragteil, und wegen der großen Massenträgheit verhältnismäßig langsame Bewegungen und lange Taktzeiten.

Ein anderer bekannter Transportautomat (US-A-2 792 953) hat zwar zwei in derselben senkrechten Ebene verschwenkbare Arme, diese sind jedoch auf verschiedenen Achsen gelagert und nicht unabhängig voneinander ausfahrbar. Da jeder Arm somit eine bestimmte unveränderliche Länge hat, kann der Transport von Werkstücken nur durch Verschwenken der Arme erfolgen. Diese Bewegung ist für viele Anwendungen, u. a. das Einlegen und Entnehmen von Werkstücken in bzw. aus Pressen, ungeeignet.

Um die genannten Nachteile zu vermeiden, ist es durch die DE-A-2 630 858 und die EP-A-0 043 059 bekannt, sogenannte Doppelarm-Transportautomaten zu verwenden, bei denen statt zweier einzeln sich nach entgegengesetzten Seiten erstreckender Arme ein einziger durchgehender Arm (Doppelarm) vorhanden ist, der die infolge Eigengewicht und Transportlast auftretenden Momente in Form von Zug- und Druckspannungen in sich selbst aufnimmt und im wesentlichen nur als senkrechte Last auf das ihn tragende Basisteil wirkt.

Wenn die Greifer an den beiden Armenden des Doppelarms unabhängig voneinander in Längsrichtung des Arms verfahrbar und mit Bezug auf den Doppelarm bewegbar sind, ergeben sich beträchtliche Vorteile für die Arbeitsgeschwindigkeit des Geräts. Andererseits bestand bisher noch gegenüber Transportautomaten mit einzeln gelagerten und geführten Armen der Nachteil, daß das Niveau der Greifer an den Enden des Doppelarms gegenseitig abhängig war, denn wenn durch Kippen des Doppelarms um die mittlere waagerechte Achse der eine Greifer abgesenkt wurde, war bei der Doppelarm-Bauart notwendigerweise damit eine Aufwärtsbewegung des anderen Greifers verbunden. Diese gegenseitige Abhängigkeit des Arbeitsniveaus der Greifer macht sich besonders dann bemerkbar, wenn die Pressentische der beiden Pressen zwischen denen der Transportautomat aufgestellt ist, unterschiedliche Höhe haben.

Abgesehen von der begrenzten Ausgleichmöglichkeit durch die Führung und den Bewegungsantrieb der Greifer an den Armenden bestand bisher in derartigen Fällen grundsätzlich nur die Möglichkeit, zunächst den einen Greifer auf dem einen Niveau zu betätigen, dann den Doppelarm zu kippen, bis der andere Greifer auf das richtige Niveau kam, und dann diesen die vorgesehene Arbeit ausführen zu lassen.

Der Erfindung liegt die Aufgabe zugrunde, unter Beibehaltung der Vorteile der Doppelarm-Bauart den vorstehend genannten systembedingten Nachteil zu beseitigen, und zur Lösung dieser Aufgabe wird bei einem gattungsgemäßen Transportautomat vorgeschlagen, daß der Doppelarm mit einem Knickgelenk ausgebildet ist, dessen Achse mit der mittleren waagerechten Achse, um die der Doppelarm kippbar ist, zusammenfällt.

Das vorgeschlagene Knickgelenk gestattet es nunmehr, einen im Einzelfall geeigneten Winkel zwischen den beiden durch das Knickgelenk getrennten Teilen des Doppelarms einzustellen. In der Praxis wird man dabei zweckmäßigerweise so vorgehen, daß, ausgehend z. B. von der Strecklage der beiden Armenden, durch Kippen des gesamten Doppelarms zunächst der eine Greifer auf das Niveau des einen Pressentisches ausgerichtet wird. In dieser Stellung befindet sich dann normalerweise der andere Greifer noch nicht auf dem für den anderen Pressentisch richtigen Niveau. Um ihn so einzustellen, daß beide Greifer an beiden Pressentischen gleichzeitig arbeiten können, wird nunmehr der Doppelarm an dem vorgeschlagenen Knickgelenk so geknickt und eingestellt, daß auch der zweite Greifer in die richtige Arbeitsposition kommt. Die Winkellage zwischen den beiden Teilen des Doppelarms kann dann konstant beibehalten werden und braucht nicht verändert zu werden, solange sich das jeweilige Arbeitsniveau der Greifer an den beiden Pressentischen nicht ändert. Wenn nämlich während der Arbeit der Transportautomat den Doppelarm um 180° dreht und dabei den einen Greifer vom Niveau des einen Pressentischs auf das Arbeitsniveau des anderen Pressentischs bringt, indem der gesamte Doppelarm um seine mittlere waagerechte Achse gekippt wird, wird gleichzeitig auch der zweite Greifer in die Arbeitsposition gebracht, die vorher der erste Greifer eingenommen hatte.

In bevorzugter Ausgestaltung der Erfindung sind die beiden durch das Knickgelenk getrennten Teile des Doppelarms durch eine dieses überbrückende, in der Länge veränderlich einstellbare Traverse verbunden. Die Einstellung der gegenseitigen Winkellage der beiden durch das Knickgelenk getrennten Doppelarmteile erfolgt dann einfach durch Veränderung der Länge der Traverse. Da diese ein integrierter Teil des Doppelarms und somit in der Lage ist, Zugkräfte von dem einen auf den anderen Arm zu übertragen, bleiben die grundsätzlichen Vorteile der Doppelarm-Bauweise erhalten, während gleichzeitig eine bessere Anpassungsfähigkeit an veränderliche Arbeitshöhen erreicht wird, und zwar ohne Komplizierung der Steuerung. Da Änderungen der Winkelstellung der beiden Teile des Doppelarms am Knickgelenk nur selten erforderlich sind, genügt für die Praxis normalerweise eine Einstellung bzw. Veränderung der Länge der Traverse von Hand. Als konstruktiv einfache Lösung bietet sich deshalb eine Traverse an, die zur Veränderung ihrer Länge eine Schraubenspindel enthält. Es versteht sich jedoch, daß je nach Einsatzbedingungen auch motorische Antriebe zur Veränderung der Länge der Traverse oder sonstigen Änderung der relativen Winkelstellung der beiden Teile des Doppelarms am Knickgelenk vorgesehen, sein können.

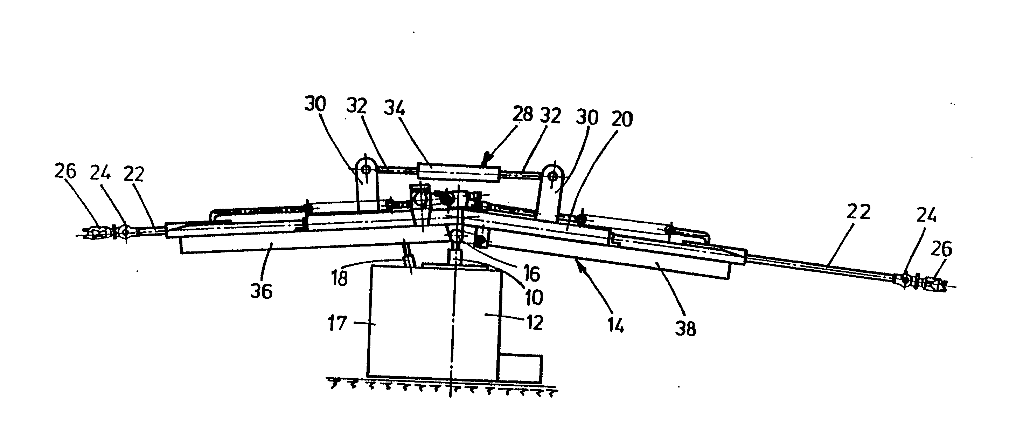

Ein Ausführungsbeispiel der Erfindung wird nachstehend anhand der Zeichnung näher erläutert.

Der dargestellte Transportautomat hat eine tragende Säule bzw. einen Ständer 10, der um eine senkrechte Achse 12 drehbar ist. Am Ständer 10 ist ein insgesamt mit 14 bezeichneter Doppelarm um eine waagerechte Kippachse 16 schwenkbar gelagert. Während der zum Drehen des in einem standfesten Gehäuse 17 gelagerten Ständers 10 um die senkrechte Achse 12 vorgesehene, vorzugsweise geregelte hydraulische Antrieb in der Zeichnung nicht dargestellt ist, wurde der ebenfalls geregelte Hydraulikantrieb zum Verschwenken des Doppelarms 14 um die waagerechte Kippachse 16 in Form eines Kraftzylinders 18 angedeutet.

Der Doppelarm 14 besteht aus einem Mittelteil 20, welches Führungen für mit Bezug auf die Drehachse 12 nach entgegengesetzten Seiten ausfahrbare Tragrohre 22 enthält. Die Letzteren bilden Verlängerungsteile des Doppelarms. Sie tragen an ihren freien Enden jeweils ein Greifergetriebe 24, durch welches in bekannter Weise ein angeflanschter Greifer 26 um eine sich in Längsrichtung des Arms erstreckende Längsachse drehbar und um eine Querachse kippbar ist.

Zur Ausführung der Antriebe der Tragrohre 22 und der Greifer 26 wird auf die eingangs genannte europäische Patentanmeldung Bezug genommen. Ergänzend wird angemerkt, daß anstelle des dort beschriebenen Antriebs der Tragrohre 22 mittels eines doppelt wirkenden hydraulischen Kraftzylinders, der mit seinem Gehäuse am Mittelteil 20 befestigt ist und eine nach beiden Seiten aus dem Zylindergehäuse herausragende Kolbenstange hat, an deren Enden Kettenräder drehbar gelagert sind, über die eine Kette geführt ist, deren einer Trum an einem Punkt relativ zum Mittelteil 20 des Doppelarms festgelegt ist, während mit einem der Kettenglieder des anderen Trums eine Stange verbunden ist, die am Gehäuse des Greifergetriebes angelenkt ist, bei dem gezeigten Ausführungsbeispiel auf jeder Seite des Doppelarms 14 ein entsprechender Antrieb mit einem über Rollen geführten Drahtseil (statt einer über Kettenräder geführten Kette) Verwendung findet.

Die Besonderheit des in der Zeichnung gezeigten Transportautomaten besteht darin, daß das Kippgelenk 16 gleichzeitig auch als Knickgelenk ausgebildet ist, d. h. um die Achse des Gelenks 16 ist der Doppelarm 14 insgesamt schwenkbar (= kippbar), und außerdem ist jeder der beiden Arme des Doppelarms für sich allein auf der Achse des Gelenks 16 drehbar gelagert, so daß die Möglichkeit besteht, die beiden Arme aus der Strecklage, in der sie fluchten, in verschiedene Relativstellungen zu bringen, in denen sie miteinander am Gelenk 16 einen von 180° Grad abweichenden Knickwinkel bilden. Die Abstützung der beiden Arme des Doppelarms, die unter der Wirkung des Eigengewichts und der von den Greifern getragenen Last das Bestreben haben, nach unten zu klappen, erfolgt durch eine Traverse 28, die mit ihren Enden gelenkig an fest mit den beiden Armen des Doppelarms verbundenen Laschen 30 angebracht ist. Die Traverse 28 besteht im Beispielsfall aus jeweils einer mit einer Lasche 30 gelenkig verbundenen Gewindespindel 32. Die Gewindespindeln greifen in eine Mutter 34 ein, durch deren Drehung, z. B. mittels eines geeigneten Werkzeugs, die Gewindespindeln 32 gleichzeitig mehr oder weniger weit in die Mutter eingeschraubt bzw. aus dieser herausgeschraubt werden können, wodurch die Länge der Traverse 28 verkürzt bzw. verlängert und dadurch der Winkel zwischen den beiden mit 36 und 38 bezeichneten Armen des Doppelarms am Gelenk 16 verändert werden kann.

**Patentansprüche**

1. Transportautomat, insbesondere zur Pressenverkettung mit einem um eine mittlere senkrechte Achse (12) drehbaren und um eine mittlere waagerechte Achse kippbaren Doppelarm, dessen miteinander verbundene Arme unabhängig voneinander nach entgegengesetzten Seiten ausfahrbare, einzeln bewegbare Greifer tragen, dadurch gekennzeichnet, daß der Doppelarm (14) mit einem Knickgelenk (16) ausgebildet ist, dessen Achse mit der mittleren waagerechten Achse, um die der Doppelarm (14) kippbar ist, zusammenfällt.

2. Transportautomat nach Anspruch 1, dadurch gekennzeichnet, daß die beiden durch das Knickgelenk (16) getrennten Teile (36, 38) des Doppelarms (14) durch eine dieses überbrückende, in der Länge veränderlich einstellbare Traverse (28) verbunden sind.

3. Transportautomat nach Anspruch 2, dadurch gekennzeichnet, daß sich die Traverse (28) oberhalb des Knickgelenks (16) mit Zwischenabstand zu diesem erstreckt.

4. Transportautomat nach Anspruch 2 oder 3, dadurch gekennzeichnet, daß die Traverse (28) zur Veränderung ihrer Länge eine Schraubenspindel (32) enthält.

**Claims**

1. Transportation automat, particularly for press chains, comprising a double arm rotatable about a central vertical axis·(12) and swingable about a central horizontal axis, the interconnected arms of which support individually movable engaging members extendable to opposite sides independently of one another, characterized in that the double arm (14) is provided with an articulated joint (16) the axis of which coincides with the central horizontal axis about which the double arm (14) is swingable.

2. A conveyor robot according to claim 1, characterized in that the two portions (36, 38) of the double arm (14) separated by the articulated joint (16) are connected by a bridging cross-bar (28) variably adjustable in length.

3. A conveyor robot according to claim 2, characterized in that the cross-bar (28) extends above the articulated joint (16) at an intermediate space therefrom.

4. A conveyor robot according to claims 2 or 3, characterized in that the cross-bar (28) includes a screw (32) for changing the length thereof.

**Revendications**

1. Automate de transport, spécialement pour l'enchaînement de presses, avec un double montant tournant autour d'un axe central vertical et basculant autour d'un axe central horizontal, dont les bras reliés l'un à l'autre portent des grappins mobiles séparément et déployables indépendemment l'un de l'autre chacun dans le sens opposé à l'autre, caractérisé en ce que le double montant (14) est conçu avec une articulation de flexion (16) dont l'axe coïncide avec l'axe central horizontal autour duquel bascule le double montant (14).

2. Automate de transport selon la revendication 1, caractérisé en ce que les deux éléments (36, 38) du double montant (14) séparés par l'articulation de flexion (16) sont reliés par une traverse (28) de longueur variable et superposant ce montant.

3. Automate de transport selon la revendication 2 caractérisé en ce que la traverse (28) s'étend au-dessus de l'articulation de flexion (16) à une certaine distance de celle-ci.

4. Automate de transport selon la revendication 2 ou 3 caractérisé en ce que la traverse (28) comprend une tige filetée pour le réglage de sa longueur.